(19) Europäisches Patentamt
European Patent Office
Office européen des brevets

(11) **EP 1 928 735 B1**

(12) # EUROPEAN PATENT SPECIFICATION

(45) Date of publication and mention
of the grant of the patent:
**09.11.2011 Bulletin 2011/45**

(51) Int Cl.:
***B64C 1/40*** *(2006.01)*

(21) Application number: **06792244.3**

(22) Date of filing: **22.09.2006**

(86) International application number:
**PCT/EP2006/009254**

(87) International publication number:
**WO 2007/039153 (12.04.2007 Gazette 2007/15)**

(54) **SOUND ABSORBING ELEMENT AND METHOD FOR PRODUCING A SOUND ABSORBING ELEMENT**

SCHALLABSORPTIONSELEMENT UND VERFAHREN ZUR HERSTELLUNG EINES SCHALLABSORPTIONSELEMENTS

ELEMENT INSONORISANT ET PROCEDE POUR PRODUIRE UN ELEMENT INSONORISANT

(84) Designated Contracting States:
**DE FR GB IT SE**

(30) Priority: **26.09.2005 DE 102005045844**
**26.09.2005 US 720640 P**

(43) Date of publication of application:
**11.06.2008 Bulletin 2008/24**

(73) Proprietor: **Airbus Operations GmbH**
**21129 Hamburg (DE)**

(72) Inventor: **BOOCK, Klaus**
**23714 Timmdorf (DE)**

(74) Representative: **Kopf, Korbinian Paul**
**Maiwald Patentanwalts GmbH**
**Elisenhof**
**Elisenstrasse 3**
**80335 München (DE)**

(56) References cited:
**EP-A2- 0 098 789      US-A- 1 972 005**
**US-A- 2 111 326      US-A- 2 263 919**
**US-A- 4 489 991**

EP 1 928 735 B1

**Description**

Technical Field

The present invention generally relates to the technical field of acoustics. In particular, the present invention relates to a sound absorbing element by which good sound absorbing measures in the entire frequency spectrum and in particular in the low frequency spectrum can be achieved. Furthermore, the invention relates to a production method for such a sound absorbing element, as well as to an aircraft in which at least one component can be designed in the form of such a sound absorbing element.

Background of the Invention

Known sound absorbing elements are often designed as double-wall systems. Such double-wall systems as a rule consists of two wall areas that are connected to each other, spaced apart, by way of mechanical connections. Above all, when the double-wall systems for reasons of space must be thin, the sound absorbing measures of known double-wall systems in particular in the low-frequency range are relatively modest. In this case the two wall areas of the known double-wall systems are coupled to each other in the most unfavourable manner by way of the air that is trapped between the wall areas, wherein in addition coupling by way of the necessary mechanical connections takes place, as a result of which sound from the one wall area can also be transferred to the other wall area. As a result of this design, known double-wall systems, however, result in only modest sound absorbing measures, a situation which appears, however, in particular in the area of aircraft and space technology, to be inadequate with a view to passenger comfort.

Further state of the art includes an insulation glass unit, disclosed in DE3014207C2, with an interior pane, an exterior pane and a gas filling in the clear space. At least one of the rims of at least one of the panes is held, by means of a sprung end unit, in a dislocatable manner so as to oscillate when exposed to sound. In the central region the spring characteristic of the end unit comprises an essentially horizontal section, along which the operating point of the end unit travels when subjected to sound.

US 4,275,801 relates to a noise and heat insulating structural component that may form a wall panel. Between two substantially parallel outer walls there is arranged at least one auxiliary damping wall forming a plurality of pockets each having a vaulted or domed surface. The auxiliary wall may be secured to both of the outer walls.

EP 0 970 896 A2 relates to a thermal and noise insulating container of multilayer insulations. Elastic bodies are arranged spaced apart between confronting frames to discontinue transmissions of sounds across the frames. In a space between the frames, a vacuum may be created by a vacuum pump.

Summary of the Invention

Starting with the disadvantages associated with the described double-wall systems, there may be a need to provide a sound absorbing element that comprises at least a double-wall, in which sound absorbing element coupling of the individual walls is reduced when compared to known double-wall systems. The sound absorbing element according to the invention is provided in claim 1. The corresponding method is provided in claim 5.

Thus, according to the invention a sound absorbing element comprises a first wall area, a second wall area and a plurality of spring elements. In this arrangement the first wall area is arranged so as to be spaced apart from the second sound absorbing element by a clear space. In this clear space a plurality of spring elements are arranged, which spring elements connect the first wall area and the second wall area to each other. These spring elements have decreasing spring characteristics and by pre-tensioning can be brought to a state in which their spring constant approaches zero so that the dynamic coupling between the first and the second wall area by way of springs also largely approaches zero. In

order to achieve the greatest possible dynamic decoupling between the first wall area and the second wall area, it is possible to pre-tension a plurality of spring elements, as a result of which, in particular in the low-frequency range, far-reaching decoupling between the first and the second wall area may be achieved. While in the above description the sound absorbing element comprises two wall areas that are spaced apart from each other, the sound absorbing element can also comprise three or more wall areas, each being decoupled from each other by spring elements.

In order to possibly generate the necessary pre-tension acting on the springs, the clear space through which the first wall area and the second wall area face each other are subjected to negative pressure, as a result of which the plurality of spring elements are pre-tensioned. Apart from the pre-tension effect, which can be achieved by such evacuation of the clear space, subjecting this clear space to negative pressure may have a further positive effect in that, as a result of this, coupling of the first and the second wall by the air that is usually trapped in the clear space may be minimised. The high loads that may occur as a result of such evacuation of the clear space are taken up by way of the spring elements, whose spring constant in the load range resulting from the negative pressure is set such that it approaches zero, as a result of which dynamically almost no loads may be transferred any longer.

In order to possibly achieve such a spring constant, according to an exemplary embodiment each one of the plurality of spring elements has a spring characteristic *F(x)* which at least in sections has a decreasing region. Thus the spring characteristic *F(x)* may be curved in a concave manner in a certain region, in which it preferably comprises a high point or maximum, in which the spring constant adjusts to zero, as a result of gradient formation. In the region around this high point, the spring constant, while as a result of gradient formation is not exactly zero, nevertheless approaches zero, which with a view to sound absorption may have a favourable effect in that in this region dynamically almost no loads are transferred any longer.

An attempt is made to build up pre-tension to such an extent that the spring constant in the decreasing spring characteristics area sets itself at zero; however, as a rule this point will be difficult to set. However, good results may be achieved even if the individual spring elements of the plurality of spring elements are pre-tensioned up to a region in which the gradient, in other words the spring constant, is less than 5% of the maximum value of the gradient of the entire region of the spring characteristic.

While any desired spring elements may be used that has a decreasing spring characteristic in sections, experiments have, however, shown that good results may be obtained with the use of saucer springs or disc springs as spring elements.

To possibly prevent the negative pressure generated in the clear space between the first wall area and the second wall area from dissipating, according to an exemplary embodiment the first wall area and the second wall area are rimmed by a flexible sealing element that seals the clear space off from the atmosphere.

In order to possibly prevent the "snapping around" of the spring elements in the region in which their gradient is almost zero, according to an exemplary embodiment the first wall area and the second wall area can in addition be mutually supported by way of other spring elements as end stops, which spring elements comprise a linear, progressive or any other type of spring characteristic, which does not display a snap-around effect, or whose high point is in a different excursion range than the high point of the spring elements first mentioned within in the context of the present invention. In this way a situation may be achieved in which when the first-mentioned spring elements tend to snap around, the loads generated as a result of the vacuum may be further absorbed by the spring elements that in this document are the second spring elements mentioned.

As has already been explained in the introduction, known double-wall thin sound absorbing elements, in particular in the low-frequency range, can achieve only modest sound absorbing measures. By contrast, with the design of a sound absorbing element according to an exemplary embodiment of the invention considerable improvements may be achieved.

According to another exemplary aspect of the present invention, a method for producing a double-shell sound element is provided, in which in a first step a first wall area is connected to a second wall area by way of a plurality of spring elements so that the first wall area and the second wall area are arranged so as to be spaced apart from each other by a clear space. In this arrangement the spacing of the clear space is determined by the elongation of the spring elements. In a further step the plurality of spring elements is pre-tensioned such that the first wall area and the second wall area are very largely dynamically decoupled mechanically. Instead of spacing only two wall areas apart by way of a plurality of spring elements it is of course also possible to arrange a third or still more wall areas by spring elements apart from the first or the second wall area so that an entire packet of wall areas that are arranged spaced apart from each other arises.

Since a particularly simple way of pre-tensioning the plurality of spring elements and of reducing the air sound transmission consisty in applying negative pressure to the clear space between the first and the second wall element, according to an exemplary embodiment the clear space between the first wall element and the second wall element is sealed off from the atmosphere by a sealing element that borders the first wall area and the second wall area. By such a seal a situation may be achieved in which negative pressure generated in the clear space remains constant over time rather than equalising in relation to the exterior atmosphere. Furthermore, by a suction nozzle and a suction pump connected to it the required negative pressure may be matched to the conditions of use.

As described above, according to an exemplary embodiment the spring elements used must have a decreasing spring characteristic at least in sections, in which range the spring characteristic forms a high point. Good decoupling of the first and the second wall area may be generated in that the plurality of spring elements are pre-tensioned to such an extent that the gradient of the spring characteristic, i.e. the spring constant, has a value of zero. Since this point is, however, difficult to set, it may be sufficient, as a rule, to pre-tension the plurality of spring elements up to a region in which their spring constant has a value which is less than 5% of their maximum spring constant. If the spring constant is set to such a value, substantial improvements in sound absorption may be achieved.

According to a further exemplary aspect of the invention, furthermore, an aircraft is provided, in which at least the ice protection shield in the propeller region and the fuselage skin that is situated underneath it at some small distance are designed as a sound absorbing element, as described above. In particular, on the ice shield, which is attached to the fuselage in order to protect said fuselage from ice that has dropped off a propeller, extremely high noise levels occur, which have to be kept away from the cabin interior for reasons of passenger comfort, which is why in particular the design of the ice shield in the form of the sound absorbing element according to an exemplary embodiment of the invention may prove to be advantageous.

Brief Description of the Drawings

Below, the present invention is explained in an exemplary manner with reference to the enclosed drawings. The exemplary embodiment described in the figures by way of an example only serves to better understand the invention; it must, in particular, not be interpreted in any way as limiting the protective scope of the invention. The following are shown:

Fig. 1     shows a perspective wire frame model of the sound absorbing element according to an exemplary embodiment of the invention;

Fig. 2     shows a cross section of a sound absorbing element according to an exemplary embodiment of the invention; and

Fig. 3     shows an exemplary spring characteristic of a spring element of the sound absorbing element according to an exemplary embodiment of the invention.

In all the figures, identical or similar elements have the same or corresponding reference signs. The diagrams are not necessarily to scale, but they are suitable for reproducing qualitative size relationships.

Description of an Exemplary Embodiment

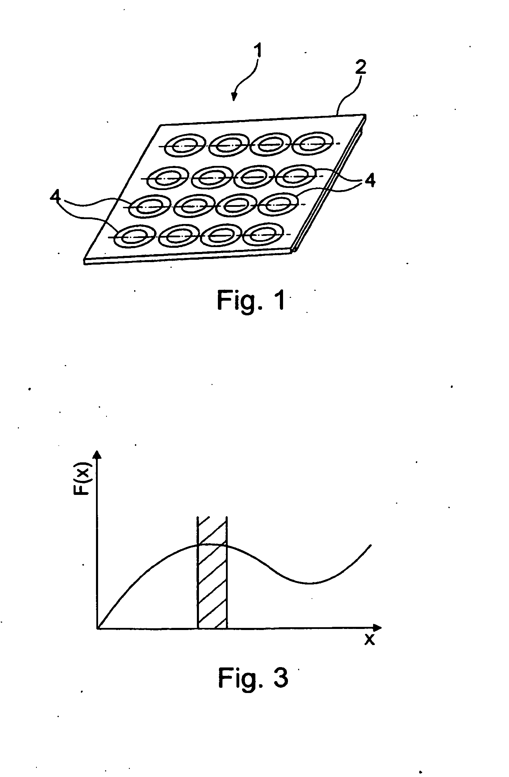

Fig. 1 shows a perspective view of a sound absorbing element 1 according to an exemplary embodiment of the invention, in which sound absorbing element 1 a first wall area 2 and a second wall area 3 are arranged so as to be spaced apart by a plurality of spring elements 4, which in the arrangement shown are saucer springs 4. For the sake of clarity the first wall area 2 is shown so as to be transparent, in order to better show the interior of the sound absorbing element 1 according to the exemplary embodiment of the invention. In this arrangement the saucer springs 4 are arranged in a regular rectangular grid relative to each other so that, as even as possible, a. decoupling of the first wall area 2 from the second wall area 3 is achieved.

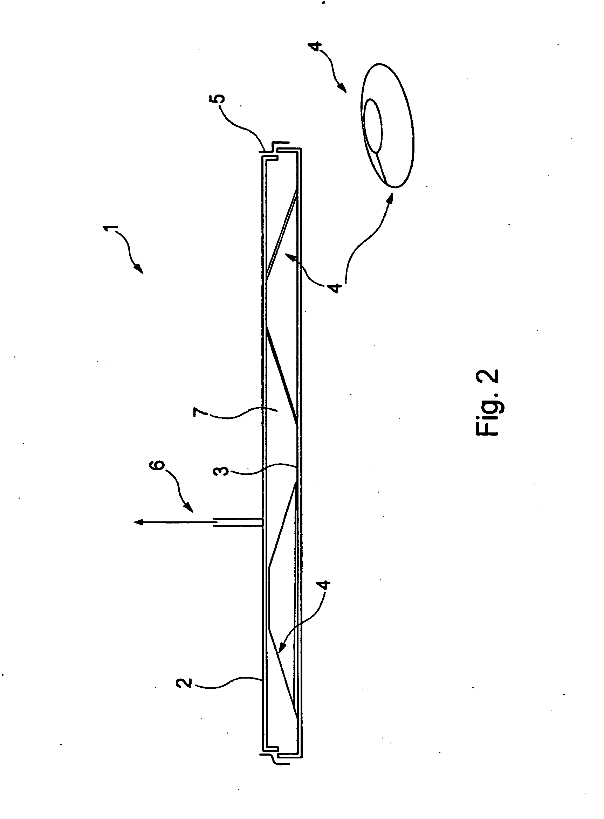

As can better be seen in Fig. 2 the first wall area 2 and the second wall area 3 are arranged spaced apart from each other by a clear space 7. In this clear space 7 in the embodiment shown two saucer springs 4 are arranged, which connect the first wall area 2 and the second wall area 3 with each other. While the saucer springs 4 can be pre-tensioned in any manner desired, provided no contact arises between the wall areas 2, 3, there is however a particularly simple option of pre-tensioning the saucer springs 4 in that negative pressure is applied to the clear space 7 by way of suction 6, as a result of which the saucer springs 4 are pre-tensioned. In order to maintain negative pressure that has been generated in this manner, in the clear space 7 over time, the sound absorbing element 1 is bordered on the rims of the first wall area 2 and the second wall area 3 by a flexible rubber sealing element 5, which seals the clear space 7 from the exterior atmosphere. Furthermore the negative pressure is set and maintained by way of a suction pump that is connected to the suction nozzle 6. Negative pressure may mean that the pressure is lower than a pressure that is present in a space outside of the clear space, e.g. a pressure which is lower than an air pressure of the ambient air.

With reference to Fig. 3, finally a spring characteristic F(x) is presented, which a saucer spring 4 may have for implementing the decoupling, according to the exemplary embodiment of the invention, of the first wall area 2 from the second wall area 3. The diagram shown in Fig. 3, shows the excursion x on the x-axis, and the spring force or load F(x) on the y-axis. Starting from zero, the spring force increases underproportionally up to the high point of the spring characteristic, which spring characteristic is generally referred to as being decreasing or declining. Since, as is known, the gradient in the spring characteristic at a position x represents the spring constant of the spring, the spring constant, in the spring characteristic shown in Fig. 3, is maximal in the point of origin, because at that point the maximum gradient takes place. Up to the high point the rise in the spring characteristic continuously decreases, which at the same time means that the spring constant, too, gradually decreases. At the high point, finally, the gradient or rise in the spring characteristic equals zero, which means that at this point the spring constant is zero.

If a saucer spring is pre-tensioned up to the region around the high point, then with a further dynamic excursion of the saucer spring as a result of sound, said saucer spring will no longer be able to transmit additional loads, as a result of which it is possible to achieve far-reaching decoupling with the use of a saucer spring with such a spring characteristic. To be sure, the best decoupling results if the saucer spring is pre-tensioned precisely to the high point of its spring characteristic; however, since this point is difficult to set, it can suffice if the saucer springs 4 are pre-tensioned to such an extent that the value of their gradient $\partial F/\partial x$ less than 5% of the maximum gradient value $\partial F/\partial x$ in the entire region of the spring characteristic F(x), which with the spring characteristics shown is achieve in the origin. In Fig. 3 a hatched region is shown in which a load capacity is high and the spring constant is low, i.e. $\dfrac{dF}{dx} \approx 0$.

**LIST OF REFERENCE SIGNS**

1     Sound absorbing element

2    First wall area

3    Second wall area

4    Spring element

5    Sealing element

6    Suction

7    Clear space

**Claims**

1.  A sound absorbing element (1) for an aircraft, the sound absorbing element comprising:

    - a first wall area (2);
    - a second wall area (3);
    - a plurality of spring elements (4); and
    - a suction nozzle and a suction pump connected thereto;
    wherein the first wall area (2) and the second wall area (3) are arranged so as to be spaced apart from each other by a clear space (7), in which clear space (7) the plurality of spring elements (4) are arranged which connect the first wall area (2) and the second wall area (3) to each other;
    wherein each individual spring element of the plurality of spring elements (4) is pre-tensioned for decoupling the first wall area (2) from the second wall area (3);
    wherein each individual one of the plurality of spring elements (4) has a spring characteristic F(x) with at least one region in which the gradient $\partial F/\partial x$ approaches zero;
    wherein negative pressure is applied to the clear space (7), as a result of which the plurality of spring elements (4) are pre-tensioned up to a region in which the value of the gradient $\partial F/\partial x$ is less than 5% of the maximum value of the gradient $\partial F/\partial x$ in the entire region of the spring characteristic F(x); and
    wherein the negative pressure is set and maintained in relation to the exterior atmosphere by the suction nozzle and the suction pump.

2.  The sound absorbing element of claim 1, wherein each individual one of the plurality of spring elements (4) has a spring characteristic F(x) at least in part with a decreasing region.

3.  The sound absorbing element of any one of the preceding claims, wherein the plurality of spring elements (4) are formed as saucer springs.

4.  The sound absorbing element of any one of the preceding claims, further comprising:

    - a sealing element (5) that borders the first wall area (2) and the second wall area (3) and that seals the clear space (7) from the atmosphere.

5.  A method for producing a double-shell sound absorbing element for an aircraft, the method comprising the steps of:

    - connecting a first wall area (2) to a second wall area (3) by way of a plurality of spring elements (4) so that the first wall area (2) and the second wall area (3) are arranged spaced apart from each other by a clear space (7);
    - pre-tensioning the plurality of spring elements (4) so that the first wall area (2) and the second wall area (3) are dynamically decoupled;
    wherein pre-tensioning of the plurality of spring elements (4) takes place in that negative pressure is applied to the clear space (7);
    wherein each individual one of the plurality of spring elements (4) has a spring characteristic F(x) with at least one region in which the gradient $\partial F/\partial x$ approaches zero;
    wherein the plurality of spring elements (4) are pre-tensioned up to a region in which the value of the gradient $\partial F/\partial x$ is less than 5% of the maximum value of the gradient $\partial F/\partial x$ in a entire region of the spring characteristic F(x);
    wherein the negative pressure is set and maintained in relation to the exterior atmosphere by a suction nozzle and a suction pump connected thereto.

6.  The production method of claim 5, with the further step of:

    - sealing the clear space (7) off from the atmosphere with a sealing element (5) that borders the first wall area and the second wall area.

7.  An aircraft comprising at least one component of the group of components consisting of an ice protection shield and a fuselage skin, of which at least one is designed as a sound absorbing element of one of claims 1 to 4.

**Patentansprüche**

1.  Schalldämmelement (1), umfassend:

    - eine erste Wandfläche (2);
    - eine zweite Wandfläche (3);
    - eine Vielzahl an Federelementen (4); und
    - ein Absaugstutzen und eine daran angeschlossene Absaugpumpe;

wobei die erste Wandfläche (2) und die zweite Wandfläche (3) durch einen Zwischenraum (7) beabstandet zueinander angeordnet sind, in welchem Zwischenraum (7) die Vielzahl an Federelementen (4) angeordnet sind, die die erste Wandfläche (2) und die zweite Wandfläche (3) miteinander verbinden;

wobei jedes einzelne Federelement der Vielzahl an Federelementen (4) zur Entkopplung der ersten Wandfläche (2) und der zweiten Wandfläche (3) vorgespannt ist;

wobei jedes einzelne der Vielzahl an Federelemente (4) eine Federkennlinie F(x) mit zumindest einem Bereich besitzt, in welchem der Gradient $\partial F/\partial x$ gegen Null geht;

wobei der Zwischenraum (7) mit einem Unterdruck beaufschlagt ist, wodurch die Vielzahl an Federelementen (4) bis in einen Bereich vorgespannt ist, in welchem der Wert des Gradients $\partial F/\partial x$ kleiner als 5% des maximalen Werts des Gradienten $\partial F/\partial x$ im gesamten Bereich der Federkennlinie $F(x)$ ist; und

wobei der Unterdruck gegenüber der Außenatmosphäre durch den Absaugstutzen und die Absaugpumpe eingestellt und aufrechterhalten wird.

2. Schalldämmelement gemäß Anspruch 1, wobei jedes einzelne der Vielzahl an Federelemente (4) eine Federkennlinie F(x) mit zumindest abschnittweise einem degressiven Bereich aufweist.

3. Schalldämmelement gemäß einem der vorstehenden Ansprüche, wobei die Vielzahl an Federelemente (4) als Tellerfedern ausgebildet sind.

4. Schalldämmelement gemäß einem der vorstehenden Ansprüche, ferner umfassend:

   - ein Dichtungselement (5), welches die erste Wandfläche (2) und die zweite Wandfläche (3) berandet und welches den Zwischenraum (7) gegenüber der Atmosphäre abdichtet.

5. Verfahren zur Herstellung eines doppelschaliges Schalldämmelements, mit den Schritten:

   - Verbinden einer ersten Wandfläche (2) mit einer zweiten Wandfläche (3) über eine Vielzahl an Federelemente (4), sodass die erste Wandfläche (2) und die zweite Wandfläche (3) durch einen Zwischenraum (7) beabstandet zueinander angeordnet sind;
   - Vorspannen der Vielzahl an Federelementen (4), sodass die erste Wandfläche (2) und die zweite Wandfläche (3) dynamisch entkoppelt sind;

wobei das Vorspannen der Vielzahl an Federelementen (4) erfolgt, indem der Zwischenraum (7) mit einem Unterdruck beaufschlagt wird;

wobei jedes einzelne der Vielzahl an Federelemente (4) eine Federkennlinie F(x) mit zumindest einem Bereich besitzt, in welchem der Gradient $\partial F/\partial x$ gegen Null geht;

wobei der Zwischenraum (7) mit einem Unterdruck beaufschlagt ist, wodurch die Vielzahl an Federelementen (4) bis in einen Bereich vorgespannt ist, in welchem der Gradient $\partial F/\partial x$ Wert besitzt, der kleiner als 5% des maximalen Werts des Gradienten $\partial F/\partial x$ im gesamten Bereich der Federkennlinie $F(x)$ ist;

wobei der Unterdruck gegenüber der Außenatmosphäre durch einen Absaugstutzen und eine daran angeschlossene Absaugpumpe eingestellt und aufrechterhalten wird.

6. Herstellungsverfahren gemäß Anspruch 5, mit dem weiteren Schritt:

   - Abdichten des Zwischenraums (7) gegenüber der Atmosphäre mit einem Dichtungselement (5), welches die erste Wandfläche und die zweite Wandfläche berandet.

7. Flugzeug mit zumindest einem Bauteil aus der Gruppe von Bauteilen bestehend aus Eis-Schutz-Schild und Rumpfhaut von denen zumindest eines als Schalldämmelement gemäß einem der Ansprüche 1 bis 4 ausgebildet ist.

**Revendications**

1. Elément insonorisant (1) pour un avion, l'élément insonorisant comportant :

   - une première surface de paroi (2),
   - une seconde surface de paroi (3),
   - une pluralité d'éléments à ressort (4), et
   - une buse d'aspiration et une pompe aspirante reliée à celle-ci,

   dans lequel la première surface de paroi (2) et la seconde surface de paroi (3) sont agencées de manière à être espacées l'une de l'autre par un espace de dégagement (7), espace de dégagement (7) dans lequel est agencée la pluralité d'éléments à ressort (4) qui relient la première surface de paroi (2) et la seconde surface de paroi (3) l'une à l'autre,

   dans lequel chaque élément à ressort individuel de la pluralité d'éléments à ressort (4) est précontraint pour séparer la première surface de paroi (2) de la seconde surface de paroi (3),

   dans lequel chaque élément individuel de la pluralité d'éléments à ressort (4) a une caractéristique de ressort F(x) avec au moins une région dans laquelle le gradient $\partial F/\partial x$ s'approche de zéro,

dans lequel une pression négative est appliquée à l'espace de dégagement (7), en résultat de quoi la pluralité d'éléments à ressort (4) est précontrainte jusqu'à une région dans laquelle la valeur du gradient $\partial F/\partial x$ est inférieure à 5 % de la valeur maximale du gradient $\partial F/\partial x$ dans la région complète de la caractéristique de ressort F(x), et

dans lequel la pression négative est établie et maintenue par rapport à l'atmosphère extérieure, par la buse d'aspiration et la pompe aspirante.

2. Elément insonorisant selon la revendication 1, dans lequel chaque élément individuel de la pluralité d'éléments à ressort (4) a une caractéristique de ressort F(x) au moins en partie avec une région décroissante.

3. Elément insonorisant selon l'une quelconque des revendications précédentes, dans lequel la pluralité d'éléments à ressort (4) est formée sous forme de ressorts Belleville.

4. Elément insonorisant selon l'une quelconque des revendications précédentes, comportant en outre :

- un élément d'étanchéité (5) qui borde la première surface de paroi (2) et la seconde surface de paroi (3) et qui étanchéifie l'espace de dégagement (7) par rapport à l'atmosphère.

5. Procédé pour produire un élément insonorisant à double enveloppe pour un avion, le procédé comportant les étapes consistant à :

- relier une première surface de paroi (2) à une seconde surface de paroi (3) au moyen d'une pluralité d'éléments à ressort (4) de telle sorte que la première surface de paroi (2) et la seconde surface de paroi (3) sont agencées espacées l'une de l'autre par un espace de dégagement (7),

- précontraindre la pluralité d'éléments à ressort (4) de telle sorte que la première surface de paroi (2) et la seconde surface de paroi (3) sont séparées dynamiquement,

dans lequel la précontrainte de la pluralité d'éléments à ressort (4) a lieu lorsqu'une pression négative est appliquée sur l'espace de dégagement (7),

dans lequel chaque élément individuel de la pluralité d'éléments à ressort (4) a une caractéristique de ressort F(x) avec au moins une région dans laquelle le gradient $\partial F/\partial x$ s'approche de zéro,

dans lequel la pluralité d'éléments à ressort (4) est précontrainte jusqu'à une région dans laquelle la valeur du gradient $\partial 3F/\partial x$ est inférieure à 5 % de la valeur maximale du gradient $\partial F/\partial x$ dans une région complète de la caractéristique de ressort F(x),

dans lequel la pression négative est établie et maintenue par rapport à l'atmosphère extérieure, par une buse d'aspiration et une pompe aspirante reliée à celle-ci.

6. Procédé de production selon la revendication 5, comportant l'étape supplémentaire consistant à :

- étanchéifier l'espace de dégagement (7) par rapport à l'atmosphère avec un élément d'étanchéité (5) qui borde la première surface de paroi et la seconde surface de paroi.

7. Avion comportant au moins un composant du groupe de composants constitué d'un écran de protection contre le givre et d'un revêtement de fuselage, dont au moins un est conçu sous la forme d'un élément insonorisant selon l'une des revendications 1 à 4.

Fig. 1

Fig. 3

Fig. 2

EP 1 928 735 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3014207 C2
- US 4275801 A
- EP 0970896 A2